Europäisches Patentamt

European Patent Office

Office européen des brevets

(11) Veröffentlichungsnummer: **0 367 029**

**A1**

(12) **EUROPÄISCHE PATENTANMELDUNG**

(21) Anmeldenummer: 89119374.0

(22) Anmeldetag: 19.10.89

(51) Int. Cl.5: **C10L 3/00 , C03B 40/04**

(30) Priorität: 04.11.88 DE 3837491

(43) Veröffentlichungstag der Anmeldung:
09.05.90 Patentblatt 90/19

(84) Benannte Vertragsstaaten:
**AT BE DE FR GB IT NL**

(71) Anmelder: **MESSER GRIESHEIM GMBH**
**Hanauer Landstrasse 330**
**D-6000 Frankfurt/Main(DE)**

(72) Erfinder: **Farwer, Alfward, Dr.**
**Asternstrasse 30**
**D-4005 Meerbusch 3(DE)**

(54) **Gasgemisch.**

(57) Die Erfindung betrifft ein Gasgemisch für das thermische Auftragen von Ruß auf Oberflächen. Dabei kann die Rußqualität, wie zum Beispiel die Korngröße, der Fettgehalt oder die Porosität durch geringe Änderungen von nur einer Gaskomponente bzw. einer Gasgemischkomponente eingestellt werden, wenn das Gasgemisch

   a) aus einer Kohlenwasserstoffkomponente bzw. einem Komponentengemisch, wobei mindestens eines der Kohlenwasserstoffgase Mehrfachbindungen enthält und

   b) aus einer kohlenwasserstofffreien Komponente und/oder Komponentengemisch, die bzw. das Wasserstoff enthält, zusammengesetzt ist.

EP 0 367 029 A1

## Gasgemisch

Die Erfindung betrifft ein Gasgemisch und ein Verfahren zum thermischen Beschichten von Oberflächen nach den Oberbegriffen der Ansprüche 1 und 7.

Gase bzw. Gasgemische mit hohen Kohlenwasserstoffanteilen bilden bei ihrer Verbrennung Ruß, der allgemein geeignet ist für die Verwendung als Festschmiermittel. Er wird daher vorteilhaft als Trennmittel für Gießformen, Blockformen, Kokillen, Vorformen oder ähnlichen, in denen eine Metallschmelze oder Glasschmelze vergossen wird, eingesetzt.

Da die Qualität des Rußes, wie z. B. die Korngröße, der Fettgehalt oder die Porosität dem jeweiligen Anwendungsfall angepaßt werden muß, ist es für eine optimale thermische Beschichtung von Oberflächen sehr wesentlich, aus welchen Komponenten das Gasgemisch zusammengesetzt ist.

In dem Bestreben die Qualität des Rußes zu verbessern, wird in der EP 00 22 385 B1 eine Vorrichtung vorgeschlagen, mittels der zuerst ein thermisches Kracken von Acetylenmolekülen eines Acetylenstrahles in einer Heizzone und anschließend eine unvollständige Luft-Acetylen-Verbrennungsreaktion erfolgt. Hierzu weist die Vorrichtung eine zentrale Ausstoßöffnung auf, aus der das Acetylen in Form eines Strahles austritt und eine Mehrzahl von um den Strahl angeordnete Heizmundstücke oder Heizöffnungen.

Eine ähnliche Vorrichtung, die anstatt eines Acetylenstrahles einen flüssigen Butanstrahl verwendet ist aus der US-PS 34 53 084 bekannt.

Wie aus der EP 02 38 403 A1 hervorgeht, wird mit der vorstehend genannten Vorrichtung bzw. dem Verfahren ein Ruß erzeugt, der eine fette Konsistenz hat und daher die Formen und die Glasgegenstände schnell verschmutzt.

Gemäß der EP 02 38 403 A1 wird daher ein Gasgemisch vorgeschlagen, welches aus Kohlenwasserstoffen mit wenigstens 15 % Anteilen von Acetylen besteht. Zum Einsatz sollen an sich bekannte Mischungen von Acetylen-, Propin-, Propadien-, Bensol- oder Acetylen-, Äthilenmischungen oder Mischungen aus Propin, Propadien, Propylen und weiteren Kohlenwasserstoffen mit $C_3$ oder $C_4$ gelangen (DE-OS 27 55 854, DE-OS 27 55 934, DE-OS 28 23 305).

Rußschichten, die mit diesem Gasgemisch hergestellt werden, besitzen eine befriedigende Qualität; sie lassen sich jedoch nur ungenau und über große volumentrische Änderungen in der Gaszusammensetzung an den jeweiligen Anwendungsfall anpassen. Die Feineinstellung für einen beliebigen Anwendungsfall erfolgt dann über die Einspritzgeschwindigkeit des Kohlenwasserstoffes und die Temperatur der Heizflamme.

Aus der DE 33 10 753 C2 ist weiterhin ein Verfahren zum Berußen von Oberflächen bekannt, bei dem die Rußqualität über eine Erhöhung der Flammengeschwindigkeit eines organischen, brennbaren Gases verbessert werden soll. Dem direkt auf die zu berußende Oberfläche gerichteten Brenngas wird nach einem ersten Ausführungsbeispiel hierzu ein inertes Treibgas zugemischt; nach einem zweiten Ausführungsbeispiel wird das Brenngas von einem inerten Hüllgasstrahl umgeben, der eine höhere Strömungsgeschwindigkeit als das Brenngas besitzt.

Hohe Flammengeschwindigkeiten lassen sich vorteilhaft nur bei auf die zu beschichtenden Oberflächen gerichteten Flammengasen einsetzen. Außerdem reduziert die Beimengung inerter Treibgase die Rußmenge erheblich.

Der Erfindung liegt daher die Aufgabe zugrunde, ein Gasgemisch zu schaffen, welches diese Beeinträchtigungen nicht aufweist und mittels dem die Rußqualität durch geringe Änderungen von nur einer Gaskomponente bzw. einer Gasgemischkomponente eingestellt werden kann.

Diese Aufgabe wird erfindungsgemäß durch die kennzeichnenden Merkmale des Anspruchs 1 erreicht.

Überraschenderweise hat sich nämlich gezeigt, daß die Rußqualität, insbesondere der Fettgehalt und die Porosität sehr genau eingestellt werden kann, dadurch, daß dem Kohlenwasserstoffgas ein Wasserstoff enthaltenes Zusatzgas beigegeben wird. Damit wird eine hohe Rußmenge bei der gewünschten Rußkonsistenz erreicht. Spezielle Anforderungen an die Rußqualität in Abhängigkeit von der Formentemperatur, z. B. beim Anfahren der Produktion, lassen sich beosnders gut erfüllen durch Variation des Anteiles von Wasserstoff im Gesamtgemisch.

In einer bevorzugten Ausbildung wird dem Kohlenwasserstoffgas, z. B. Acetylen, vor dem Austritt ein Stickstoff-Wasserstoffgemisch (Formiergas) aus einer an sich bekannten Düse zugemischt.

Für bestimmte Anwendungen, die einen etwas fetteren Ruß erfordern, ist die Zumischung von reinem Wasserstoff besonders günstig.

Das Acetylen-Wasserstoff-haltige Gemisch wird beim Austritt aus der Düse gezündet und verbrennt karburierend.

## Ansprüche

1. Gasgemisch für das thermische Auftragen von Ruß auf Oberflächen,

dadurch gekennzeichnet,
daß es zusammengesetzt ist

a) aus einer Kohlenwasserstoffkomponente bzw. einem Komponentengemisch, wobei mindestens eines der Kohlenwasserstoffgase Mehrfachbindungen enthält und

b) aus einer kohlenwasserstoffreien Komponente und/oder Komponentengemisch, die bzw. das Wasserstoff enthält.

2. Gasgemisch nach Anspruch 1,
dadurch gekennzeichnet,
daß die Kohlenwasserstoffreie Komponente bzw. das Komponentengemisch neben Wasserstoff ein nicht brennbares Gas bzw. Gasgemisch enthält.

3. Gasgemisch nach Anspruch 1 oder 2,
dadurch gekennzeichnet,
daß die kohlenwasserstoffreie Komponente bzw. das Komponentengemisch neben Wasserstoff mindestens eines der Gase Stickstoff, Argon oder Sauerstoff enthält.

4. Gasgemisch nach Anspruch 1,
dadurch gekennzeichnet,
daß die Kohlenwasserstoffreie Komponente reiner Wasserstoff ist.

5. Gasgemisch nach einem der Ansprüche 1 bis 3,
dadurch gekennzeichnet,
daß das Komponentengemisch ein Stickstoff/Wasserstoffgemisch mit mindestens 10 % Wasserstoffanteil ist.

6. Gasgemisch nach einem der Ansprüche 1 bis 5,
gekennzeichnet durch
einen Anteil von mindestens 50 Vol.% Acetylen.

7. Verfahren zum thermischen Beschichten von Oberflächen mittels Kohlenwasserstoffen oder Kohlenwasserstoffgemischen, welche beim Austritt aus einer Düse gezündet werden und die Verbrennungsflamme von den zu beschichtenden Oberflächen umgeben werden,
dadurch gekennzeichnet,
daß die Struktur der durch Zünden entstehenden und sich auf den Oberflächen ablagernden Schichten durch die Zugabe von einem wasserstoffhaltigen Gas eingestellt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-1 505 340 (HARRIS)<br>* Ansprüche 1,2 *<br>--- | 1,4 | C 10 L 3/00<br>C 03 B 40/04 |
| X | DE-A- 402 697 (UEBERSEE-METALL AG)<br>* Ansprüche *<br>--- | 1 | |
| X | GB-A-1 141 160 (MESSER GRIESHEIM)<br>* Anspruch 1; Beispiel *<br>--- | 1,3,6 | |
| D,A | EP-A-0 238 403 (L'AIR LIQUIDE)<br>* Ansprüche 1,5-7 *<br>--- | 1,7 | |
| A | US-A-4 498 918 (SEEMAN)<br>* Anspruch 1 *<br>----- | 1,7 | |

RECHERCHIERTE
SACHGEBIETE (Int. Cl.5)

C 10 L
C 03 B

Der vorliegende Recherchenbericht wurde für alle Patentansprüche erstellt

| Recherchenort | Abschlußdatum der Recherche | Prüfer |
|---|---|---|
| DEN HAAG | 04-12-1989 | DE HERDT O.C.E. |